# EUROPÄISCHE PATENTSCHRIFT

(11) **EP 1 621 059 B1**
(45) Veröffentlichungstag und Bekanntmachung des Hinweises auf die Patenterteilung: **02.05.2007**
(21) Anmeldenummer: 05016360.9
(22) Anmeldetag: 28.07.2005
(51) Int. Cl.: A01C 7/04

(54) **Pneumatische Einzelkornsämaschine**
Pneumatic single-grain seeder
Semoir monograine pneumatique

(30) Priorität: 30.07.2004 DE 102004037188
(43) Veröffentlichungstag der Anmeldung: 01.02.2006
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- DE-A1- 3 701 132
- FR-A- 2 641 441
- US-A- 6 142 086

## Beschreibung

Die Erfindung betrifft eine pneumatische Einzelkornsämaschine gemäß des Oberbegriffes des Patentanspruches 1.

Eine derartige Einzelkornsämaschine ist in der EP 02 16 057 B1 beschrieben. Bei dieser Einzelkornsämaschine kann die Vereinzelungstrommel gegen andere Vereinzelungstrommeln mit in anderen Abständen zueinander angeordneten Perforationsreihen ausgetauscht werden, um unterschiedliche Reihenabstände zu realisieren, sowie an saatgutspezifische Eigenarten angepasste Trommeln einzusetzen.

Eine weitere Sämaschine mit den Merkmalen des Oberbegriffes des Anspruches 1 ist aus der DE-A-37 01 132 bekannt.

Somit müssen also bei der bekannten Maschine eine Vielzahl Trommeln unterschiedlicher Ausgestaltung vorgehalten werden.

Der Erfindung liegt die Aufgabe zugrunde, mittels einfacher Mittel Vereinzelungstrommeln für eine Einzelkornsämaschine für verschiedene Saatgutarten zu realisieren, die einfach, schnell und preiswert an unterschiedliche Saatgutreihenabstände entsprechend des auszubringenden Saatgutes angepasst werden können.

Diese Aufgabe wird erfindungsgemäß dadurch gelöst, dass die Trommel aus mehreren abdichtend miteinander verbundenen Segmenten besteht. Infolge dieser Maßnahme kann die Trommel aus verschiedenen Segmenten entsprechend den jeweiligen Einsatzbedingungen zusammengesetzt werden. Es brauchen nur schmale Segmente mit den entsprechenden Perforierungen vorgehalten werden, die dann durch entsprechende "Blindstücke", welche keine Perforationen haben, auf Abstand gehalten werden.

Somit lassen sich aus verschiedenen Segmenten mit und ohne Perforation die gewünschte Trommel einfach zusammensetzen.

Auch ist es möglich, mehrere Perforationsreihen zu einem Segment zusammenzufassen, welche wiederum durch Segmente ohne Perforation zueinander entsprechend auf Abstand gehalten werden.

In einer Ausführung lässt sich eine Trommel dadurch herstellen, dass die Segmente mittels Spannelementen zu einer Trommel verspannt sind.

In einer anderen Ausgestaltung der Erfindung ist vorgesehen, dass die einzelnen Segmente auf einem Tragkörper aufgeschoben sind.

Weiteren Einzelheiten der Erfindung sind der Beispielsbeschreibung und den Zeichnungen zu entnehmen. Hierbei zeigen
- Fig. 1: die Vereinzelungstrommel einer Einzelkornsämaschine in perspektivischer Darstellung und teilweise Explosionsdarstellung,
- Fig. 2: eine weitere aus Einzelsegmenten zusammengesetzte Vereinzelungstrommel in perspektivischer Darstellung und
- Fig. 3: eine weitere aus Einzelsegmenten zusammengesetzte Vereinzelungstrommel in perspektivischer Darstellung.

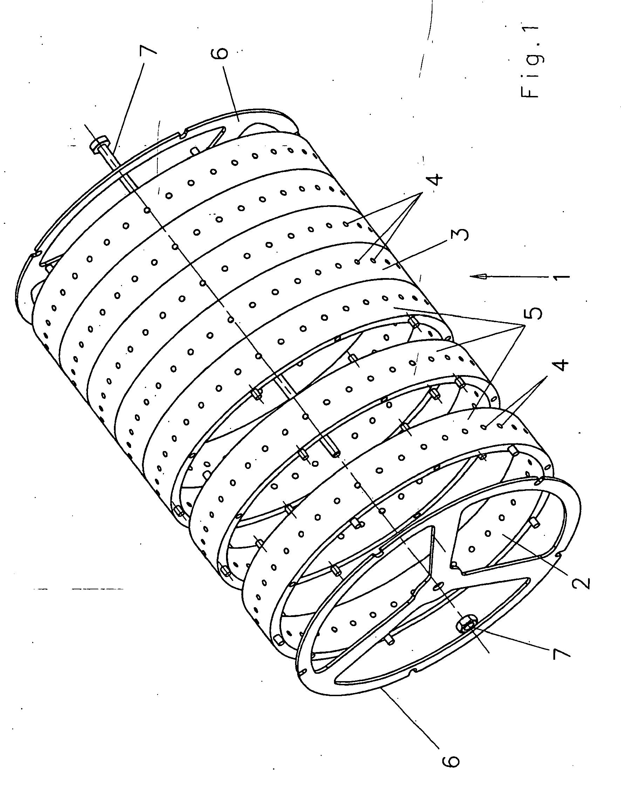

Die Vereinzelungstrommel 1 gemäß Fig. 1 einer Einzelkornsämaschine ist in nicht dargestellter Weise drehbar angetrieben einem Vorratsbehälter zugeordnet. Die Trommel 1 wird mit Luftdruck beaufschlagt, so dass eine Druckdifferenz zwischen dem Innenraum 2 der Vereinzelungstrommel 1 und dem Außenbereich 3 der Vereinzelungstrommel 1 in bekannter und daher nicht näher dargestellter Weise erzeugt wird. Die Vereinzelungstrommel 1 wird an einem Saatgutvorrat vorbeigeführt, so dass sich an der Perforation 4 der perforierten Trommel 1 Samenkörner anlagern können. Auf der Innenseite 2 sind in nicht dargestellter und bekannter Weise Trennmittel angeordnet, um die Samenkörner von der Trommel 1 zu trennen. An der Außenseite 3 der Trommel 1 beginnende und zur Saatgutablageorgan führende Saatleitungen sind in nicht dargestellter Weise der Einzelkornsämaschine zugeordnet, um das vereinzelte Saatgut im Boden ablegen zu können.

Die Trommel 1 besteht aus mehreren abdichtetend miteinander verbundenen Ringsegmenten 5, wie Fig. 1 zeigt. Diese einzelnen Segmente 5 sind miteinander verbindbar und werden über die stirnseitigen Abflussstücke 6 und des als Schraube ausgebildeten Spannmittels 7 zu der Trommel 1 verspannt. Durch eine entsprechende Anzahl von als Perforationsreihen ausgebildeten Ringsegmenten 5 können Vereinzelungstrommeln 1 mit unterschiedlichen Reihenzahlen einfach zusammengesetzt werden.

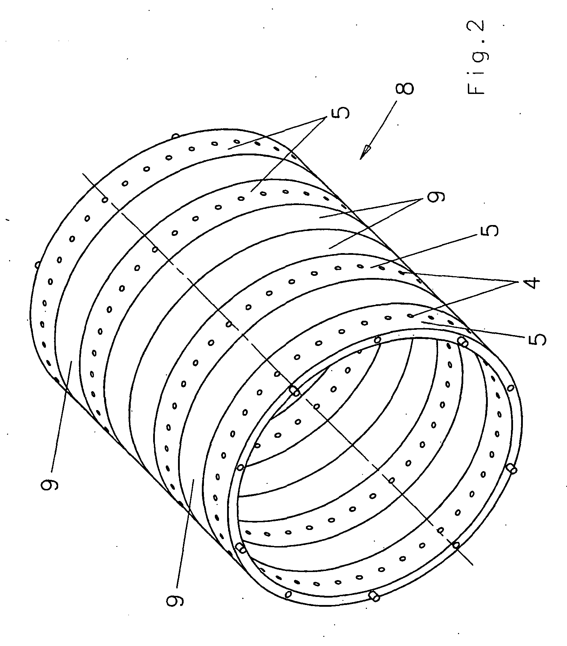

Wenn eine andere Saatgutart vereinzelt werden soll, die in gewünschter Weise mit einem anderen Reihenabstand im Boden abgelegt werden soll, lässt sich einfach eine Vereinzelungstrommel 8 gemäß Fig. 2 herstellen, die aus Ringsegmenten 5 mit Perforation 4 und Ringsegmenten 9 ohne Perforation besteht.

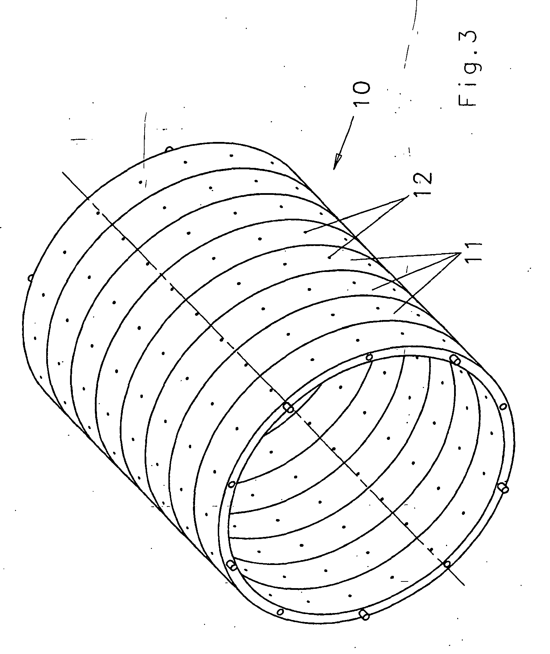

Gemäß Fig. 3 ist eine Vereinzelungstrommel 10 aus Ringsegmenten 11 mit kleineren Perforationen 12 als in den Fig. 1 und 2 dargestellt.

Es ist auch möglich, die Segmente 5 an Stelle in der in der Fig. 1 dargestellten Form miteinander zu verspannen, auf einem nicht dargestellten Tragkörper aufzuschieben und dort festzusetzen.

## Patentansprüche

1. Pneumatische Einzelkornsämaschine mit einem Saatgutvorratsbehälter und zumindest einer drehbar angeordneten Vereinzelungstrommel, in deren Umfangsfläche kreisförmig angeordnete Perforationsreihen angebracht sind, einem Gebläse, mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an der Perforation der perforierten Trommel Samenkörner anlagern, sowie mit auf der Innenseite der Trommel anliegenden Trennmitteln, um die Samenkörner von der Trommel zu trennen, und an der Außenseite der Trommel beginnenden und zur Saatgutablageorganen führenden Saatleitungen, **dadurch gekennzeichnet, dass** die Trommel (1,8,10) aus mehreren abdichtetend miteinander verbundenen Segmenten (5,9,11) besteht.

2. Einzelkornsämaschine nach Anspruch 1, **dadurch gekennzeichnet, dass** Segmente (5,9,11) mit und ohne Perforation (4,12) vorgesehen sind.

3. Einzelkornsämaschine nach Anspruch 1, **dadurch gekennzeichnet, dass** Segmente (5,9,11) mit in unterschiedlichen Abständen zueinander angeordneten Perforationsreihen (4,12) vorgesehen sind.

4. Einzelkornsämaschine nach Anspruch 1, **dadurch gekennzeichnet, dass** die Segmente (5,9,11) mittels Spannelementen (7) zu einer Trommel (1,8,10) verspannt sind.

5. Einzelkornsämaschine nach Anspruch 1, **dadurch gekennzeichnet, dass** die Segmente auf einem Tragkörper aufgeschoben sind.

6. Einzelkornsämaschine nach einem oder mehreren der vorstehenden Ansprüche, **dadurch gekennzeichnet, dass** Trommeln (1,8,10) mit einer eine unterschiedliche Anzahl von Saatleitungen mit Samenkörnern beschickbare Perforationen (4,12) vorgesehen sind.

## Claims

1. Pneumatic single-grain seed drill with a seed material hopper and at least one singling-out drum that is disposed so as to be rotatable, rows of perforations being disposed in a circular manner in the circumferential face of the said singling-out drum, a fan through the intermediary of which it is possible to generate a pressure difference between the interior of the singling-out drum and the outer region of the singling-out drum, such that, when the singling-out drum is guided through the seed material hopper, grains of seed are deposited at the perforation of the perforated drum, as well as separating means that are supported on the inside of the drum in order to separate the grains of seeds from the drum, and seed lines that begin on the outside of the drum and lead to the seed material depositing members, **characterised in that** the drum (1, 8, 10) comprises a plurality of segments (5, 9, 11) that are interconnected in a sealing manner.

2. Single-grain seed drill according to claim 1, **characterised in that** segments (5, 9, 11) are provided with and without perforation (4, 12).

3. Single-grain seed drill according to claim 1, **characterised in that** segments (5, 9, 11) are provided with rows (4, 12) of perforations disposed at different spacings one from another.

4. Single-grain seed drill according to claim 1, **characterised in that** the segments (5, 9, 11) are tensioned through the intermediary of tensioning members (7) to form a drum (1, 8, 10).

5. Single-grain seed drill according to claim 1, **characterised in that** the segments are pushed onto a carrier body.

6. Single-grain seed drill according to one or several of the preceding claims, **characterised in that** drums (1, 8, 10) are provided with a perforation (4, 12) that is chargeable with grains of seeds from a different number of seed lines.

## Revendications

1. Semoir mono-graine pneumatique comportant un réservoir de semence et au moins un tambour séparateur, rotatif, dont la surface périphérique comporte des rangées circulaires de perforations, une machine soufflante créant une différence de pression entre le volume intérieur du tambour séparateur et la zone extérieure du tambour de façon que lorsque le tambour séparateur passe dans la réserve de graines, des graines de semence se fixent sur les perforations du tambour perforé, ainsi que des moyens séparateurs appliqués contre le côté intérieur du tambour pour séparer les graines de semence du tambour et des conduites de semence commençant sur le côté extérieur du tambour et aboutissant aux organes de dépose de semence,
**caractérisé en ce que**
le tambour (1, 8, 10) est formé de plusieurs segments (5, 9, 11) reliés de manière étanche les uns aux autres.

2. Semoir mono-graine selon la revendication 1,
**caractérisé en ce que**
les segments (5, 9, 11) sont avec ou sans perforations (4, 12).

3. Semoir mono-graine selon la revendication 1,
**caractérisé en ce que**
les segments (5, 9, 11) sont munis de rangées de perforations (4, 12) séparées de distances différentes.

4. Semoir mono-graine selon la revendication 1,
**caractérisé en ce que**
les segments (5, 9, 11) sont serrés par des éléments de serrage (7) pour former un tambour (1, 8, 10).

5. Semoir mono-graine selon la revendication 1,
**caractérisé en ce que**
les segments sont emmanchés sur un organe de support.

6. Semoir mono-graine selon l'une ou plusieurs des revendications précédentes,
**caractérisé en ce que**
les tambours (1, 8, 10) sont munis d'un nombre de perforations (4, 12) recevant des graines de semence différentes du nombre de conduites à semence.
